# EUROPEAN PATENT SPECIFICATION

(11) **EP 0 500 217 B1**
(45) Date of publication and mention of the grant of the patent: **13.12.1995**
(21) Application number: 92300662.1
(22) Date of filing: 27.01.1992
(51) Int. Cl.: G01L 5/00, H01R 43/048

(54) **Apparatus for determining the force imposed on a terminal during crimping thereof**
Vorrichtung zur Bestimmung der Kraft beim Verpressen einer elektrischen Anschlussklemme
Appareil pour la détermination de l'effort de sertissage appliqué à une borne électrique

(30) Priority: 22.02.1991 US 660191
(43) Date of publication of application: 26.08.1992
(73) Proprietor: THE WHITAKER CORPORATION, Wilmington, Delaware 19808 (US)
(72) Inventor: Yeomans, Michael Anthony, Camp Hill, Pennsylvania 17011 (US)
(74) Representative: Warren, Keith Stanley

(56) References cited:
- EP-A- 0 291 329
- US-A- 2 479 653
- US-A- 3 002 669
- US-A- 4 348 908

## Description

This invention relates to the crimping of terminals onto wires and particularly to determining the force imposed on the terminal during the crimping cycle.

Terminals are typically crimped onto wires by means of a terminal applicator which is operated by a conventional press. Such a press and applicator arrangement is disclosed in U.S.-A- No. 3,184,950. Such applicators include two crimping die sets, one for crimping the terminal onto the conductor of the wire and the other for crimping the strain relief portions of the terminal onto the insulated portion of the wire. Each crimping die set includes a crimping bar, or punch, and a mating anvil. The anvils are usually fixed and stationary with respect to the base of the press while the crimping bars are carried by and reciprocate with the ram into and out of crimping engagement with their respective anvils. This type of applicator has no provisions for sensing and measuring the force imposed on a terminal during the crimping cycle. U.S.-A- 4,856,186, on the other hand, shows a crimping press that utilizes a strain gage attached to the crimping anvil to sense the force imposed on the terminal. Since crimping presses and terminal applicators are arranged to accept a variety of different crimping die sets, with this arrangement a strain gage must necessarily be attached to each anvil. This, of course, is an added expense and requires the reconnection of the electrical connections every time the die set is changed. Efforts were made to locate a strain gage within the base of the applicator; however, these efforts were not successful due to the lack of room under the anvils and the difficulty in separating the wire crimping force from the insulation crimping force.

EP-A-0 291 329 proposes a solution whereby a strain gauge is attached to a slender neck portion of the ram.

An object of the present invention is to provide means for measuring the force imposed on the terminal by the crimping of the terminal onto the wire conductor exclusive of the insulation crimping force, while permitting the exchange of die sets without the need to reconnect a sensor element.

The invention consists in a terminal applicator for crimping a terminal onto a conductor of a wire by means of a crimping die set, said applicator having a base and a ram arranged for opposed relative reciprocating motion, said ram carrying a crimping bar of said crimping die set and said base carrying an anvil of said crimping die set, and said crimping bar having a major surface and an adjacent abutting surface, and means for determining the force imposed on said terminal caused only by the crimping of said terminal onto said conductor comprising:
(a) coupling means for coupling said crimping bar to said ram, said coupling means including a cantilevered member projecting from said ram, and fastener means for securing said crimping bar to said ram so that said major surface of said crimping bar is urged toward a mounting surface of said ram with a force sufficient to assure lateral stability of said crimping bar with respect to said ram, and said abutting surface is in abutting engagement with said cantilevered member so that during said crimping of said terminal a substantial amount of said force imposed on said terminal is transmitted through said crimping bar to said cantilevered member;
(b) measuring means for measuring the amount of force imposed on said cantilevered member during said crimping of said terminal; and
(c) means for translating said measured force into said force imposed on said terminal.

So as to assure the lateral stability of the crimping bar when coupled to the ram, the major surface of the crimping bar may, for example, be urged against the mounting surface of the ram with a force of about 450 kgs (1000 pounds).

Embodiments of the present invention will now be described by way of example with reference to the accompanying drawings in which:
FIGURES 1 and 2 are front and side views respectively of a portion of a prior art terminal applicator showing how the crimping bar is secured to the ram;
FIGURES 3 and 4 are front and side views respectively of a portion of a terminal applicator showing how the crimping bar is secured to the ram in accordance with the teachings of the present invention;
FIGURE 5 is an isometric enlarged view of the portion of Figure 4 indicated by the arrow 5;
FIGURE 6 is a schematic diagram showing the electrical interconnections of the strain gages of Figure 5; and
FIGURE 7 is a view similar to that of Figure 4 showing a second embodiment of the invention.

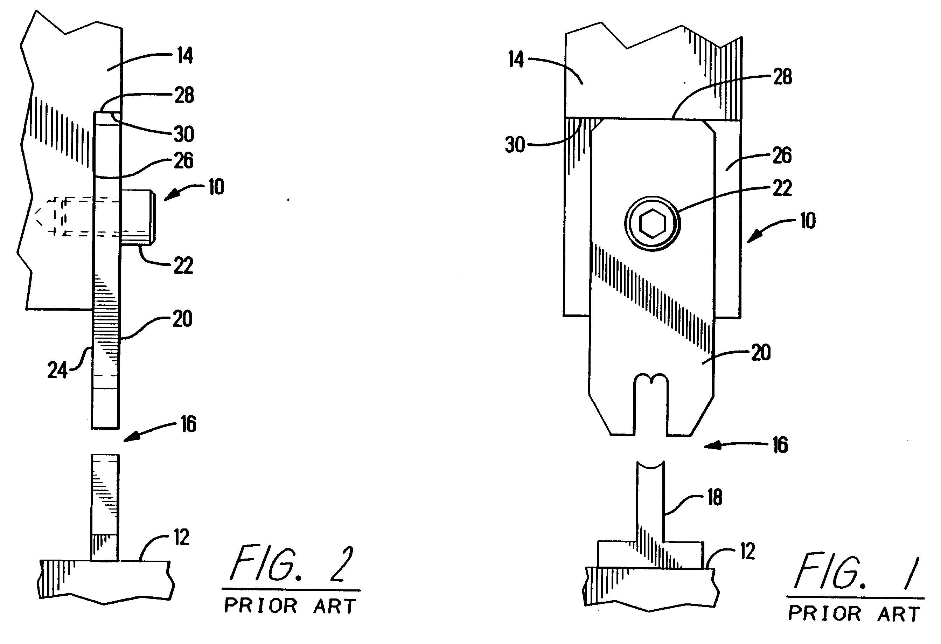

Figures 1 and 2 illustrate a portion of a typical prior art terminal applicator 10 of the type disclosed in the above referenced ′950 patent. The applicator 10 includes a base 12 and a ram 14 arranged for reciprocating motion toward and away from the base 12. A die set 16 for crimping a terminal onto the conductor of a wire is shown. The die set 16 includes an anvil 18 which is secured to the base 12 by suitable screw fasteners, not shown, and a crimping bar, or punch 20, which is secured to the ram 14 by means of a screw fastener 22 which is threaded into a hole in the ram 14. The crimping bar 20 has a major surface 24 which is urged tightly against a mounting surface 26 of the ram 14 by the screw fastener 22. The crimping bar 20 also has an abutting surface 28 which is in abutting engagement with a shoulder 30 disposed in the ram 14. During the crimping cycle, the force imposed on the terminal by the mating of the crimping bar 20 with the anvil 18 is transmitted downwardly through the anvil 18 to the base 12 and upwardly through the crimping bar 20 to both the shoulder 30 and to the mounting surface 26 by virtue of the screw 22. The screw 22 is usually tightened to about 7.9 newton metres (70 pound inches) of torque resulting in a clamping force of about 910 kgs (2000 pounds) against the mounting surface 26 resulting in some of the upwardly transmitted force being diverted from the crimping bar 20 to the mounting surface 26. This clamping force inhibits sideways movement of the crimping bar 20 during operation. It will be understood that this is a somewhat simplified view of a prior art terminal applicator in that many parts have been omitted such as the insulation crimping die set as well as the shut height adjusting mechanism and the part feeding mechanism. However, the present disclosure is directed to the measurement of the force imposed on the terminal when crimping the terminal onto a conductor of a wire and, therefore, will be limited to structure directed only to that end. If desired, the above referenced ′950 patent will provide a detailed explanation of such a terminal applicator.

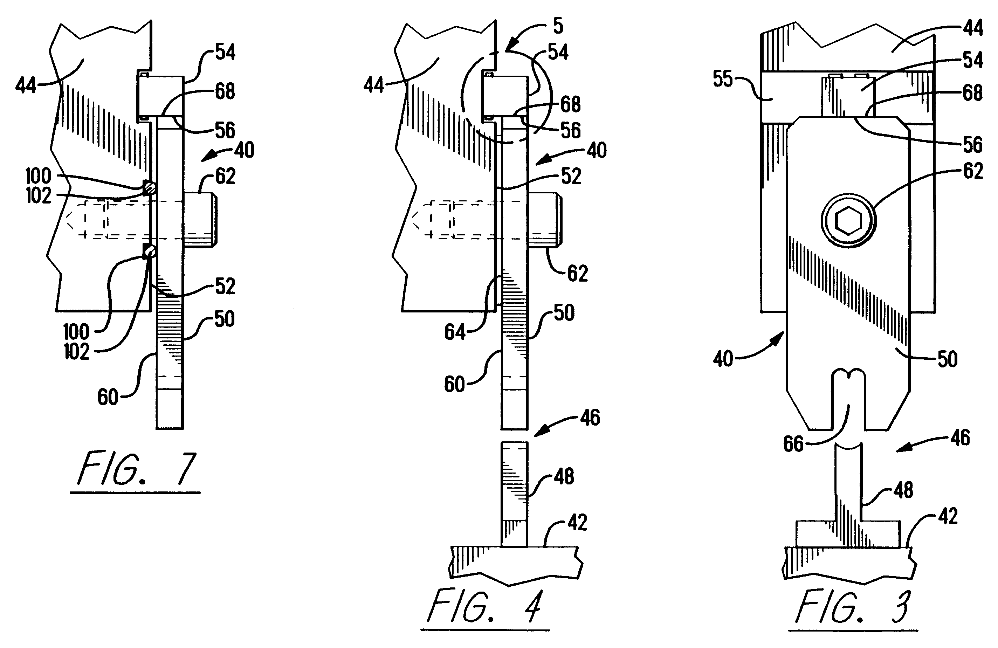

Figures 3 and 4 illustrate a portion of a terminal applicator 40 similar to that disclosed in Figures 1 and 2, however, showing how the crimping bar is coupled to the ram in accordance with the teachings of the present invention. The applicator 40 includes a base 42 and a ram 44 arranged for reciprocating motion toward and away from the base 42 in a manner similar to that of the prior art applicator 10. A die set 46 for crimping a terminal onto a conductor of a wire is shown. The die set 46 includes an anvil 48 which is secured to the base 42 by any suitable means, and a crimping bar, or punch 50 which is secured to the ram 44. The ram 44 includes a mounting surface 52 and a cantilevered member 54 projecting outwardly from the mounting surface as shown in Figures 3 and 4. An undercut 55 is provided in the surface 52 around the cantilevered member 54 for a purpose that will be set forth below. The cantilevered member 54 includes a banking surface 56 which is substantially normal to the mounting surface 52.

The crimping bar 50, having a major surface 60, is secured to the ram 44 by means of the screw 62. The screw 62 is tightened to about 7.9 newton metres (70 pound inches) of torque resulting in a clamping pressure of about 910 kgs (2000 pounds) urging the major surface 60 toward the mounting surface 52. In the present example, a layer 64 of material is disposed intermediate the major surface 60 and the mounting surface 52 for a purpose that will be explained below. The crimping bar 50 has a die opening 66 at one end thereof for mating with the anvil 48. An abutting surface is disposed at the opposite end of the crimping bar 50 and is in abutting engagement with the banking surface 56 of the cantilevered member as shown in Figures 3 and 4.

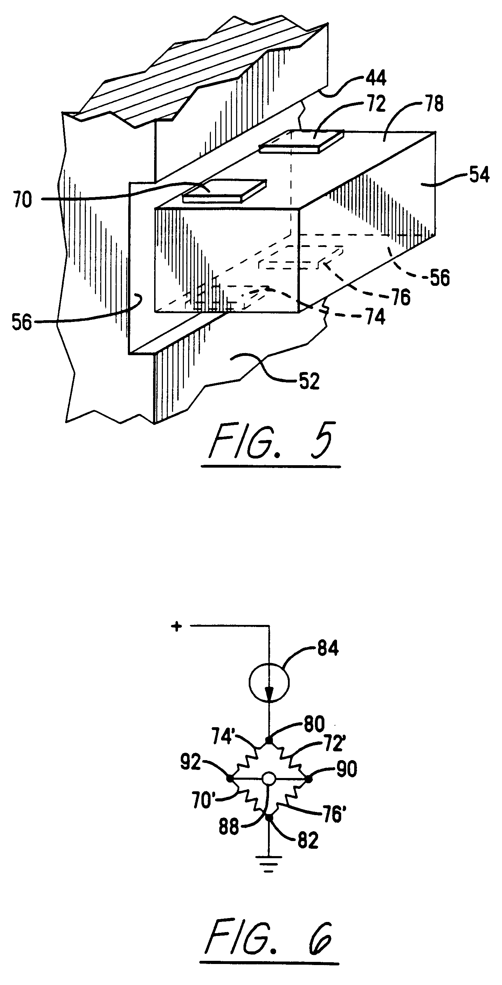

The cantilevered member 54 and ram 44 are of unitary construction, being machined from a single piece of material. Four strain gages 70,72,74 and 76 are attached to the cantilevered member in the usual manner, with the gages 70 and 72 being positioned on a surface 78 which is opposite the banking surface 56, and the gages 74 and 76 being positioned on the banking surface 56, as best seen in Figure 5. In the present example, strain gage model number TK-06-S085N-350 was used which is manufactured by Measurements Group Inc. of Raleigh, North Carolina. However, any suitable strain gage may be advantageously used in the practice of the present invention.

There is shown in Figure 6 a schematic diagram of the electrical hook up of the four strain gages 70,72,74 and 76 which are identified as 70′,72′,74′ and 76′ respectively. Note that the four strain gages are interconnected in the form of a Wheatstone bridge with its nodes 80 and 82 connected to a constant current source 84 and ground respectively. This provides a regulated current through the Wheatstone bridge in the usual manner. A voltage monitoring device 88 is connected to the nodes 90 and 92 for sensing voltage changes in the circuit. The monitoring device 88, in the present example, includes an analog to digital convertor and a computer interconnected in a manner similar to that shown in U.S.-A-4,916,810.

In operation, a terminal and associated wire, not shown, are positioned on the anvil 48, see Figures 3 and 4, and the ram 44 is made to reciprocate downwardly toward the base 42. As the crimping bar 50 engages the terminal, the resistance of the terminal results in a force being upwardly directed through the crimping bar 50 causing the abutting surface 68 to push against the banking surface 56 of the cantilevered member 54. This causes the cantilevered member 54 to deflect upwardly, as viewed in Figure 4, an amount that is approximately proportional to the force being imposed upon the terminal being crimped. The undercut 55 enhances deflection by moving the root of the cantilevered member 54 further away from the banking surface 56, as viewed in Figure 4. This upward deflection of the cantilevered member 54 causes the strain gages 70 and 72 to undergo a slight compression and the other strain gages 74 and 76 to undergo a slight tension. This in turn causes an imbalance in the Wheatstone bridge circuit resulting in a change in voltage at the nodes 90 and 92 which is proportional to the force being imposed upon the cantilevered member and is indicative of the force being imposed upon the terminal being crimped. This resulting changed voltage is monitored by the device 88 and is translated into the actual force imposed on the terminal in a manner set forth in the above referenced ′810 patent. Or, if desired, any suitable means that is known in the industry may be utilized to perform the translation.

In order for the cantilevered member to be deflected, as described above, the abutting surface 68 of the crimping bar 50 must necessarily move upwardly a finite amount in response to the crimping operation. However, as was set forth above, the crimping bar 50 is clamped to the ram 44 with a force of about 910 kgs (2000 pounds) to provide lateral stability to the crimping bar during production crimping. This clamping force causes some of the crimping force being directed upwardly through the crimping bar to be diffused into the ram 44 so that the resulting force that deflects the cantilevered member is not identical to the force imposed upon the terminal being crimped. Further, the difference between these two forces is affected by the condition of the surfaces 60 and 52 and the presence of foreign matter. To minimize this difference and to provide a high degree of repeatability, the layer 64 was sandwiched between the two surfaces 60 and 52. The layer 64 may be any material that has a modulus of elasticity sufficient so that it can withstand the 910 kg clamping force and has a coefficient of friction with steel of about 0.1 or less. It was found that a layer 64 of oil was simply squeezed out by the clamping pressure, however, a layer of polytetrafluoroethylene having a coefficient of friction of about 0.04 or less, commonly known as TEFLON, was found to be quite satisfactory. While the teachings of the present invention may be advantageously employed without the inclusion of the layer 64, its inclusion renders the system more sensitive and responsive to small changes in the force imposed on the terminal by the crimping bar 50. Additionally, the layer 64 has sufficient compressive strength to permit the clamping of the crimping bar 50 to the ram 44 to assure lateral stability of the crimping bar during sustained operation in a production environment.

A variation in the terminal applicator 40 is shown in Figure 7 which is somewhat similar to Figure 4 having like elements commonly identified. As shown in Figure 7, the layer 64 is replaced with a pair of slots 100 which are disposed in the mounting surface 52 and run transversely across its face, a slot 100 being on each side of the screw 62. A pair of rollers 102 are disposed, one in each slot as shown in Figure 7. The slots 100 have a depth slightly less than the diameter of the rollers and a width slightly greater than the diameter thereby permitting a slight rolling action in the vertical direction as viewed in Figure 7. With this structure, the screw 62 may be tightened to the desired value to provide the necessary lateral stability of the crimping bar 50 while, at the same time, providing for slight vertical movement of the crimping bar to deflect the cantilevered member as set forth above. With this structure, any desired number of slots 100 and rollers 102 may be utilized and the slots 100 may be disposed in either the mounting surface 52 or the major surface 60. Additionally, the slots 100 and rollers 102 may be replaced with openings containing balls or other rolling members, the openings being of any suitable shape.

An important advantage of the present invention is that the force imposed on a terminal being crimped may be determined easily and accurately while maintaining lateral stability of the crimping bar. This is accomplished without the added expense of installing strain gages on each different crimping anvil and the need for reconnecting electrical connections when the crimping die sets are changed.

## Claims

1. A terminal applicator (40) for crimping a terminal onto a conductor of a wire by means of a crimping die set (46), said applicator having a base (42) and a ram (44) arranged for opposed relative reciprocating motion, said ram carrying a crimping bar (50) of said crimping die set and said base carrying an anvil (48) of said crimping die set, and said crimping bar having a major surface (60) and an adjacent abutting surface (68), and means for determining the force imposed on said terminal caused only by the crimping of said terminal onto said conductor comprising:
(a) coupling means for coupling said crimping bar (50) to said ram (44), said coupling means including a cantilevered member (54) projecting from said ram (44), and fastener means (62) for securing said crimping bar (50) to said ram (44) so that said major surface (60) of said crimping bar is urged toward a mounting surface (52) of said ram with a force sufficient to assure lateral stability of said crimping bar with respect to said ram, and said abutting surface (68) is in abutting engagement with said cantilevered member (54) so that during said crimping of said terminal a substantial amount of said force imposed on said terminal is transmitted through said crimping bar (50) to said cantilevered member (54);
(b) measuring means (70,72,74,76,84) for measuring the amount of force imposed on said cantilevered member (54) during said crimping of said terminal; and
(c) means (88) for translating said measured force into said force imposed on said terminal.

2. The applicator according to claim 1 wherein said measuring means (70,72,74,76,84) includes at least one strain gage (70,72,74,76) associated with said cantilevered member (54).

3. The applicator according to claim 1 wherein said measuring means includes a pair of strain gages (70,72) arranged to sense compression of said cantilevered member (54) and a pair of strain gages (74,76) arranged to sense tension of said cantilevered member (54) during said crimping of said terminal, said two pairs of strain gages being electrically interconnected to form a Wheatstone bridge.

4. The applicator according to claim 1, 2 or 3 wherein said cantilevered member (54) projects from said mounting surface (52) of said ram (44), and said mounting surface is undercut (55) in the proximate area substantially surrounding said cantilevered member.

5. The applicator according to claim 1, 2, 3 or 4, including a layer of material having a surface coefficient of friction of about 0.04 or less, said layer being disposed between said major surface and said mounting surface.

6. The applicator according to claim 5 wherein said layer (64) of material comprises a layer of polytetrafluoroethylene (TEFLON).

7. The applicator according to claim 6 wherein said layer of TEFLON is deposited on one of said major surface (60) or said mounting surface (52).

8. The applicator according to claim 6 wherein said layer (64) of TEFLON is separate from said major surface (60) and said mounting surface (52).

9. The applicator according to claim 1, 2, 3 or 4, including:
(a) at least two openings (100) formed in either said major surface (60) or said mounting surface (52) straddling said fastener means (62); and
(b) a rolling member (102) having a specific diameter disposed in each of said openings (100); wherein the depth of each of said openings is less than said specific diameter and the width of each of said openings is greater than said specific diameter.

10. The applicator according to claim 9 wherein said openings are slots and said rolling members are rollers.

## Patentansprüche

1. Anschlußaufsetzer (40) zum Verpressen eines Anschlusses auf einen Leiter eines Drahtes mittels eines Verpreßwerkzeugsatzes (46), wobei der Aufsetzer ein Gestell (42) und einen Stößel (44) aufweist, der für eine gegengerichtete relative Hin- und Herbewegung ausgebildet ist, wobei der Stößel einen Verpreßbalken (50) des Verpreßwerkzeugsatzes trägt und wobei das Gestell einen Amboß (48) des Verpreßwerkzeugsatzes trägt und wobei der Verpreßbalken eine Hauptfläche (60) und eine benachbarte Anlagefläche (68) aufweist, und mit einer Einrichtung zum Bestimmen der auf den Anschluß aufgebrachten Kraft, die nur durch das Verpressen des Anschlusses auf den Leiter verursacht wird,
a) mit einer Kupplungseinrichtung zum Ankuppeln des Verpreßbalkens (50) am Stößel (44), wobei die Kupplungseinrichtung ein von dem Stößel (44) hervorragendes fliegend gelagertes Element (54) aufweist, und mit einer Befestigungseinrichtung (62) zum Befestigen des Verpreßbalkens (50) an dem Stößel (44), so daß die Hauptfläche (60) des Verpreßbalkens zu einer Befestigungsfläche (52) des Stößels gedrängt wird, mit einer Kraft, die ausreicht, die seitliche Stabilität des Verpreßbalkens in bezug auf den Stößel sicherzustellen, und wobei die Anlagefläche (68) sich mit dem fliegend gelagerten Element (54) in Anlage befindet, so daß während des Verpressens des Anschlusses ein wesentlicher Teil der auf den Anschluß aufgebrachten Kraft durch den Verpreßbalken (50) auf das fliegend gelagerte Element (54) übertragen wird,
b) mit einer Meßeinrichtung (70, 72, 74, 76, 84) zum Messen des Teils der auf das fliegend gelagerte Element (54) während des Verpressens des Anschlusses aufgebrachten Kraft, und
c) mit einer Einrichtung (88) zum Übertragen der gemessenen Kraft auf die Kraft, die dem Anschluß erteilt wird.

2. Aufsetzer nach Anspruch 1, wobei die Meßeinrichtung (70, 72, 74, 76, 84) wenigstens ein Spannungsmeßgerät (70, 72, 74, 76) aufweist, das dem fliegend gelagerten Element (54) angegliedert ist.

3. Aufsetzer nach Anspruch 1, wobei die Meßeinrichtung ein Paar Spannungsmeßgeräte (70, 72) aufweist, die angeordnet sind, um die Kompression des fliegend gelagerten Elements (54) abzugreifen, und ein Paar Spannungsmeßgeräte (74, 76) aufweist, die angeordnet sind, um die Spannung des fliegend gelagerten Elementes (54) während des Verpressens des Anschlusses abzugreifen, wobei die zwei Paare der Spannungsmeßgeräte elektrisch miteinander verbunden sind, um eine Wheatstone-Brücke zu bilden.

4. Aufsetzer nach Anspruch 1, 2 oder 3, wobei das fliegend gelagerte Element (54) von der Befestigungsfläche (52) des Stößels (44) vorragt, und wobei die Befestigungsoberfläche in dem Umgebungsbereich, der im wesentlichen das fliegend gelagerte Element umgibt, ausgeschnitten ist (55).

5. Aufsetzer nach Anspruch 1, 2, 3 oder 4, mit einer Materialschicht mit einem Oberflächenreibungskoeffizient von etwa 0,04 oder kleiner, wobei die Schicht zwischen der Hauptfläche und der Befestigungsoberfläche angebracht ist.

6. Aufsetzer nach Anspruch 5, wobei die Materialschicht (64) eine Schicht von Polytetrafluorethylen (TEFLON) aufweist.

7. Aufsetzer nach Anspruch 6, wobei die Teflonschicht auf der Hauptfläche (60) oder auf der Befestigungsoberfläche (52) aufgebracht ist.

8. Aufsetzer nach Anspruch 6, wobei die Teflonschicht (64) von der Hauptfläche (60) und der Befestigungsoberfläche (52) getrennt ist.

9. Aufsetzer nach Anspruch 1, 2, 3 oder 4,
a) mit wenigstens zwei Öffnungen (100), die in der Hauptfläche (60) oder in der Befestigungsfläche (52), die auf der Befestigungseinrichtung (62) aufsitzen, und
b) mit einem Rollelement (102), das einen spezifischen Durchmesser hat und in jeder der Öffnungen (100) eingesetzt ist, wobei die Tiefe jeder Öffnung geringer ist als der spezifische Durchmesser und die Breite jeder der Öffnungen größer ist als der spezifische Durchmesser.

10. Aufsetzer nach Anspruch 9, wobei die Öffnungen Schlitze und die Rollelemente Walzen sind.

## Revendications

1. Applicateur de bornes (40), destiné à sertir une borne sur un conducteur constitué d'un fil, au moyen d'un jeu d'outils de sertissage (46), ledit applicateur comportant une base (42) et un coulisseau (44) agencé pour effectuer un mouvement de va-et-vient relativement à la base, ledit coulisseau portant une barre de sertissage (50) dudit jeu d'outils de sertissage et ladite base portant une enclume (48) dudit jeu d'outils de sertissage, et ladite barre de sertissage ayant une surface principale (60) et une surface de butée adjacente (68) et des moyens pour déterminer la force appliquée sur ladite borne, sous la seule action du sertissage de ladite borne, sur ledit conducteur, comprenant :
(a) un moyen d'accouplement destiné à accoupler ladite barre de sertissage audit coulisseau (44), ledit moyen d'accouplement comprenant un organe en porte-à-faux (54) faisant saillie depuis ledit coulisseau (44), et un moyen de fixation (62) destiné à fixer ladite barre de sertissage (50) audit coulisseau (44) , de manière que ladite surface principale (60) de ladite barre de sertissage subisse une poussée tendant à la déplacer en direction d'une surface de montage (52) dudit coulisseau avec une force suffisante pour assurer la stabilité latérale de ladite barre de sertissage par rapport audit coulisseau, et ladite surface de butée (68) étant placée en contact de butée avec ledit organe en porte-à-faux (54), de sorte que pendant ledit sertissage de ladite borne, une partie substantielle de ladite force appliquée sur ladite borne soit transmise par ladite barre de sertissage (50) audit organe en porte-à-faux (54);
(b) des moyens de mesure (70,72,74,76,84) destinés à mesurer la valeur de la force appliquée sur ledit organe en porte-à-faux (54) pendant ledit sertissage de ladite borne; et
(c) un moyen (88) destiné à effectuer la transduction de ladite force mesurée en ladite force appliquée sur ladite borne.

2. Applicateur selon la revendication 1, dans lequel lesdits moyens de mesure (70,72,74,76,84) comprennent au moins un extensomètre (70,72,74,76) associé audit organe en porte-à-faux (54).

3. Applicateur selon la revendication 1, dans lequel ledit moyen de mesure comprend une paire d'extensomètres (70,72) agencée pour détecter la compression dudit organe en porte-à-faux (54) et une paire d'extensomètres (74,76) agencée pour détecter la tension dudit organe en porte-à-faux (54) pendant ledit sertissage de ladite borne, lesdites deux paires d'extensomètres étant interconnectées électriquement pour constituer un pont de Wheatstone.

4. Applicateur selon la revendication 1, 2 ou 3, dans lequel ledit organe en porte-à-faux (54) fait saillie de ladite surface de montage (52) dudit coulisseau (44) et ladite surface de montage étant dotée d'une contre-dépouille (55) dans la zone proximale, entourant sensiblement la totalité dudit organe en porte-à-faux.

5. Applicateur selon la revendication 1, 2, 3 ou 4, comprenant une couche de matériau ayant un coefficient de frottement en surface d'à peu près 0,04 ou moins, ladite couche étant disposée entre ladite surface principale et ladite surface de montage.

6. Applicateur selon la revendication 5, dans lequel ladite couche (64) de matériau comprend une couche de polytétrafluoroéthylène (TEFLON).

7. Applicateur selon la revendication 6, dans lequel ladite couche de TEFLON est déposée sur ladite surface principale (60) ou ladite surface de montage (52).

8. Applicateur selon la revendication 6, dans lequel ladite couche de TEFLON est séparée de ladite surface principale (60) et de ladite surface de montage (52).

9. Applicateur selon la revendication 1, 2, 3 ou 4, comprenant:
(a) au moins deux ouvertures (100) formées soit dans ladite surface principale (60), soit dans ladite surface de montage (52), disposées de chaque côté dudit moyen de fixation (62): et
(b) un organe de roulement (102) ayant un diamètre spécifique, disposé dans chacune desdites ouvertures (100); dans lequel la profondeur de chacune desdites ouvertures est inférieure audit diamètre spécifique et la largeur de chacune desdites ouvertures est supérieure audit diamètre spécifique.

10. Applicateur selon la revendication 9, dans lequel lesdites ouvertures sont des rainures et lesdits organes de roulement sont des galets.
